# EUROPÄISCHE PATENTSCHRIFT

(11) **EP 3 067 165 B1**
(45) Veröffentlichungstag und Bekanntmachung des Hinweises auf die Patenterteilung: **13.11.2019**
(21) Anmeldenummer: 15003448.6
(22) Anmeldetag: 03.12.2015
(51) Int. Cl.: B25J 9/16

(54) **VERÄNDERN EINER INITIAL VORGEGEBENEN ROBOTERBAHN**
CHANGE IN AN INITIALLY PREDETERMINED ROBOT PATH
MODIFICATION D'UNE TRAJECTOIRE DE ROBOT PREDEFINIE

(30) Priorität: 09.03.2015 DE 102015002994
(43) Veröffentlichungstag der Anmeldung: 14.09.2016
(73) Patentinhaber: KUKA Deutschland GmbH, 86165 Augsburg (DE)
(72) Erfinder: Dzierzega, Christoph, 86836 Graben (DE); Dinkhoff, Markus, 48607 Ochtrup (DE)
(74) Vertreter: Schlotter, Alexander Carolus Paul

(56) Entgegenhaltungen:
- EP-A2- 1 531 028
- EP-A2- 2 255 931
- DE-A1-102005 060 967
- DE-A1-102012 015 437
- DE-T2- 60 225 137

## Beschreibung

Die vorliegende Erfindung betrifft ein Verfahren zum Verändern einer initial vorgegebenen Bahn einer Roboteranordnung mit wenigstens einem Roboter sowie ein System und ein Computerprogrammprodukt zur Durchführung des Verfahrens.

Aus der DE 10 2006 022 483 A1 ist ein Verfahren zum Anzeigen eines lokalen Bereichs einer mittels eines Spline-Verfahrens vorgegebenen Roboterbahn bekannt, bei dem ein zu ändernder Stützpunkt der Roboterbahn, der vorgegebene Bahnverlauf durch diesen und mindestens eine Richtung durch den Stützpunkt senkrecht zum Bahnverlauf dargestellt werden kann. In einer Ausführung können maximale Korrekturgrenzen dargestellt werden, innerhalb derer eine Korrektur des Ortes des Stützpunktes vorgenommen werden kann.

Insbesondere eine solche Veränderung eines Stützpunktes einer durch Splines initial vorgegebenen Roboterbahn kann zu Veränderungen der übrigen Roboterbahn führen, die vom Benutzer unerwartet bzw. schwer, insbesondere intuitiv, abschätzbar und unter Umständen nicht gewünscht sind.

Aus der EP 2 255 931 A2 ist ein Verfahren zur Steuerung eines Roboters bekannt, bei dem eine geplante Bahn durch eine Bahngenerierungseinrichtung vorgegeben, eine Steuerbahn auf Basis der geplanten Bahn durch eine Bahnkonvertierungseinrichtung automatisch bestimmt, und die Steuerbahn mit dem Roboter abgefahren wird, wobei die Bahnkonvertierungseinrichtung Krümmungsinformationen der Steuerbahn auf Basis von Krümmungsinformationen der geplanten Bahn bestimmt.

Die DE 10 2005 060 967 A1 offenbart ein Verfahren zum Einrichten einer Bahnkurve für eine Robotereinrichtung, bei dem eine Zeigeeinrichtung an Stützpunkten auf einer zu bearbeitenden Oberfläche eines Werkstücks positioniert und deren Koordinaten durch Erfassen der zugehörigen Koordinaten der Zeigeeinrichtung festgelegt werden. Zwischen jeweils zwei benachbarten Stützpunkten wird automatnisch interpoliert, um die Bahnkurve festzulegen, die auf die zu bearbeitende Oberfläche projiziert wird.

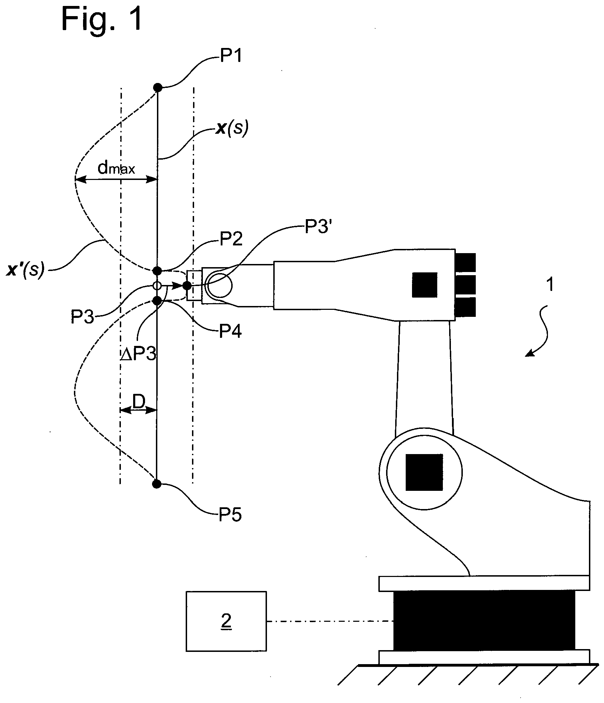

Exemplarisch zeigt hierzu Fig. 1 eine mittels Splines initial vorgegebene Roboterbahn x(s) durch vorgegebene Stützstellen P1 bis P5. Verändert der Benutzer, beispielsweise gemäß dem aus der DE 10 2006 022 483 A1 bekannten Verfahren, die Stützstelle P3 in der durch einen Verschiebepfeil ΔP3: P3→P3' angedeuteten Weise, so führt dies bzw. eine Vorgabe der Roboterbahn mittels Splines durch die Stützstellen P1, P2, P3', P4 und P5 zu einer in Fig. 1 gestrichelt angedeuteten veränderten Roboterbahn ***x'**(s),* die teilweise signifikant von der (ursprünglich) initial vorgegebenen Roboterbahn ***x**(s)* abweicht.

Aufgabe der vorliegenden Erfindung ist es, ein Verändern einer initial vorgegebenen Bahn einer Roboteranordnung mit wenigstens einem Roboter zu verbessern.

Diese Aufgabe wird durch ein Verfahren mit den Merkmalen des Anspruchs 1 gelöst. Ansprüche 10, 11 stellen ein System bzw. Computerprogrammprodukt zur Durchführung eines hier beschriebenen Verfahrens unter Schutz. Die Unteransprüche betreffen vorteilhafte Weiterbildungen.

Nach einem Aspekt der vorliegenden Erfindung weist ein Verfahren zum Verändern einer initial vorgegebenen Bahn einer Roboteranordnung mit wenigstens einem Roboter die, insbesondere wenigstens teilweise automatisierten, Schritte:
(a) Auswählen eines Teils der initial vorgegebenen Bahn;
(b) Verändern des ausgewählten Teils;
(c) Vorgeben einer veränderten Bahn auf Basis des veränderten Teils;
(d) Bestimmen einer Abweichung zwischen der initial vorgegebenen und der veränderten Bahn; und
(e) Auslösen einer Reaktion, falls die Abweichung eine vorgegebene Reaktionsbedingung erfüllt.

Dabei werden die Schritte (d) und/oder (e) in einer Ausführung in Abhängigkeit von einer, insbesondere derselben, vorgegebene Auswahlbedingung, insbesondere wahlweise aus- bzw. durchgeführt.

Entsprechend ist nach einem Aspekt der vorliegenden Erfindung ein System zum, insbesondere wenigstens teilweise automatisierten, Verändern einer initial vorgegebenen Bahn einer Roboteranordnung mit wenigstens einem Roboter, insbesondere hard- und/oder softwaretechnisch, zur Durchführung eines hier beschriebenen Verfahrens eingerichtet und/oder weist auf:
Mittel zum Auswählen eines Teils der initial vorgegebenen Bahn;
Mittel zum Verändern des ausgewählten Teils;
Mittel zum Vorgeben einer veränderten Bahn auf Basis des veränderten Teils;
Mittel zum Bestimmen einer Abweichung zwischen der initial vorgegebenen und der veränderten Bahn, insbesondere in Abhängigkeit von einer vorgegebenen Auswahlbedingung; und
Mittel zum Auslösen einer Reaktion, falls die Abweichung eine vorgegebene Reaktionsbedingung erfüllt, insbesondere in Abhängigkeit von einer, insbesondere der, vorgegebenen Auswahlbedingung.

Ein, insbesondere der einzige, oder mehrere Roboter der Roboteranordnung weisen in einer Ausführung je wenigstens sechs, insbesondere wenigstens sieben aktuierbare, insbesondere aktuierte, Gelenke, insbesondere Drehgelenke auf. Die Roboteranordnung umfasst in einer Ausführung eine Steuerung zum Aktuieren des bzw. der Roboter, insbesondere deren Gelenkantriebe, zum Abfahren der Bahn. Das System kann in der Steuerung implementiert sein und/oder mit dieser Daten austauschen bzw. hierzu eingerichtet sein.

Die Bahn der Roboteranordnung bzw. die Roboterbahn definiert, insbesondere beschreibt, in einer Ausführung eine Abfolge, insbesondere dreidimensionaler, Lagen und/oder Orientierungen einer oder mehrerer roboterfester Referenzen, insbesondere des sogenannten TCPs eines oder mehrerer Roboter der Roboteranordnung.

Durch das, insbesondere auswahlbedingungsabhängige, insbesondere wahlweise, Bestimmen einer Abweichung zwischen der initial vorgegebenen und veränderten Bahn und Auslösen einer Reaktion auf Basis bzw. in Abhängigkeit von der Abweichung kann ein Benutzer in einer Ausführung eine Veränderung der (restlichen) Bahn infolge einer von ihm vorgegebenen Veränderung eines Teils der Bahn besser abschätzen und in einer Weiterbildung gegebenenfalls verwerfen, insbesondere, falls diese Veränderung nicht gewünscht ist.

In einer Ausführung wird bzw. ist die anfänglich bzw. initial vorgegebene bzw. zu verändernde Bahn und/oder die veränderte Bahn vollständig oder abschnittsweise, insbesondere wenigstens im Bereich des zu verändernden Teils, mittels eines oder mehrerer Splines, insbesondere kubischer oder B-Splines bzw. stückweise definierter Polynome dritter oder höherer Ordnung, vorgegeben bzw. definiert, insbesondere programmiert bzw. abgespeichert, insbesondere durch vorgegebene, insbesondere abgespeicherte, Stützstellen der Splines. Je zwei aufeinanderfolgende Splines der Bahn gehen in einer Ausführung durch dieselbe Stützstelle und weisen in dieser dieselbe erste und zweite Ableitung bzw. (Bahn)Tangente und dieselbe Krümmung auf.

Definiert die Bahn eine Abfolge dreidimensionaler Lagen oder Orientierungen einer oder n roboterfester Referenzen, sind die Splines insbesondere drei- bzw. (nx3)dimensional, definiert die Bahn eine Abfolge dreidimensionaler Lagen und Orientierungen einer oder n roboterfester Referenzen, sind die Splines insbesondere sechs- bzw. (n×6)dimensional. Die Stützstellen können in einer Ausführung im kartesischen Arbeitsraum oder im Gelenkkoordinatenraum vorgegeben und gegebenenfalls durch Rückwärts-/Vorwärtstransformation in den Gelenk- bzw. Arbeitsraum überführt werden

In einer Ausführung weist der ausgewählte bzw. zu verändernde Teil eine, insbesondere vorgegebene, insbesondere abgespeicherte, Stützstelle der Bahn, insbesondere eine, insbesondere vorgegebene, insbesondere abgespeicherte, Stützstelle wenigstens eines die Bahn definierenden Splines auf, insbesondere kann der ausgewählte bzw. zu verändernde Teil eine, insbesondere vorgegebene, insbesondere abgespeicherte, Stützstelle der Bahn, insbesondere wenigstens eines die Bahn definierenden Splines, sein.

Erfindungsgemäss wird der Teil mittels manuellen Auswählens eines, insbesondere abgespeicherten, Befehls eines Programms ausgewählt, durch das die Bahn vorgegeben ist bzw. wird. Zusätzlich oder alternativ kann der Teil erfindungsgemäss auch durch, insbesondere manuell gesteuertes, Anfahren einer entsprechenden Pose der Roboteranordnung ausgewählt werden, wobei in einer Weiterbildung eine der solcherart angefahrenen Pose nächstliegender Teil der initial vorgegebenen Bahn als Teil ausgewählt wird.

In einer Ausführung wird der ausgewählte Teil mittels Vorgabe, insbesondere mittels, insbesondere manuell gesteuertem, Anfahren, eines neuen Teils verändert, insbesondere verschoben, wobei in einer Weiterbildung eine angefahrene Pose bzw. eine dieser entsprechende Lage und/oder Orientierung der roboterfesten Referenz(en), insbesondere infolge einer entsprechenden Bestätigungseingabe durch den Benutzer, als neuer bzw. geänderter Teil vorgegeben, insbesondere abgespeichert wird, insbesondere zunächst temporär.

In einer Ausführung erfolgt die Vorgabe der veränderten Bahn auf Basis des veränderten Teils vollständig oder teilweise automatisch. In einer Weiterbildung wird bzw. ist die veränderte Bahn ebenso wie die initial vorgegebene Bahn wenigstens im Bereich des ausgewählten bzw. veränderten Teils, insbesondere Stützpunktes, mittels, insbesondere typgleicher, Splines vorgegeben, wobei wenigstens ein Spline der initial vorgegebenen Bahn den ausgewählten Teil der initial vorgegebenen Bahn enthält und die veränderte Bahn derart vorgegeben wird, dass wenigstens ein Spline der veränderten Bahn den veränderten Teil enthält, wobei in einer Weiterbildung wenigstens eine, insbesondere alle, weiteren Stützstellen der Splines der initial vorgegebenen Bahn, insbesondere alle weiteren Stützstellen der gesamten initial vorgegebenen Bahn, unverändert bleiben bzw. mit den weiteren Stützstellen der veränderten Bahn übereinstimmen.

In einer Ausführung umfasst die Auswahlbedingung, in Abhängigkeit deren die Abweichung bestimmt und/oder die Reaktion ausgelöst wird, eine Benutzerauswahl, insbesondere -eingabe. Mit anderen Worten erfolgt in einer Ausführung das Bestimmen der Abweichung und das Auslösen der Reaktion wahlweise in Abhängigkeit davon, ob ein Benutzer dies wünscht oder nicht. In einer anderen Ausführung kann das Bestimmen der Abweichung und das Auslösen der Reaktion auch obligatorisch bzw. benutzerunabhängig erfolgen.

Zusätzlich oder alternativ umfasst in einer Ausführung die Auswahlbedingung, in Abhängigkeit deren die Abweichung bestimmt und/oder die Reaktion ausgelöst wird, eine Eigenschaft des ausgewählten Teils. In einer Weiterbildung kann so nur bei bestimmten Teilen der initial vorgegebenen Bahn die Abweichung überprüft und gegebenenfalls eine Reaktion ausgelöst werden. In einer Ausführung wird die Abweichung nicht bestimmt und/oder die Reaktion nicht ausgelöst, wenn der ausgewählte Teil eine erste oder letzte Stützstelle der initial vorgegebenen Bahn umfasst, insbesondere ist.

In einer Ausführung umfasst die Abweichung einen maximalen Abstand zwischen der initial vorgegebenen und der veränderten Bahn, sie kann insbesondere der maximale, insbesondere euklidische, Abstand zwischen der initial vorgegebenen und der veränderten Bahn sein. Zusätzlich oder alternativ umfasst die Abweichung in einer Ausführung einen Abstand zwischen einem ein- oder mehrteiligen vorgegebenen Bereich der initial vorgegebenen Bahn und einem vorgegebenen, insbesondere korrespondierenden Bereich der veränderten Bahn, sie kann insbesondere der maximale, insbesondere euklidische, Abstand zwischen einem vorgegebenen Bereich der initial vorgegebenen Bahn und einem vorgegebenen, insbesondere korrespondierenden Bereich der veränderten Bahn sein. Der vorgegebene Bereich kann kürzer als die (initial vorgegebene bzw. veränderte) Bahn sein und beispielsweise nur einen oder mehrere Splines umfassen. Gleichermaßen kann dieser vorgegebene Bereich auch die gesamte (initial vorgegebene bzw. veränderte) Bahn umfassen bzw. sein. Mit anderen Worten kann der, insbesondere euklidische, Abstand zwischen der initial vorgegebenen und der veränderten Bahn in einem oder mehreren ausgewählten Teilbereichen oder auf der gesamten Strecke und/oder sein Maximalwert überprüft werden.

Der Abstand zwischen einem Punkt der initial vorgegebenen Bahn und einem korrespondierenden Punkt der veränderten Bahn ist in einer Ausführung eine skalare Größe, insbesondere eine Norm, insbesondere Betrags- oder Maximumnorm, eines Verbindungsvektors von dem Punkt der initial vorgegebenen Bahn zu einem Schnittpunkt einer Normalebene durch diesen Punkt, die auf einer Bahntangente in diesem Punkt senkrecht steht, mit der veränderten Bahn.

In einer Ausführung ist die Reaktionsbedingung, insbesondere genau dann, erfüllt, wenn bzw. falls die Abweichung einen vorgegebenen Grenzwert übersteigt.

Entsprechend ist in einer Ausführung die Reaktionsbedingung, insbesondere genau dann, erfüllt, wenn bzw. falls die veränderte Bahn wenigstens punktuell außerhalb eines vorgegebenen Toleranzschlauchs um die initial vorgegebene Bahn liegt, dessen, insbesondere konstanter, Radius dann dem vorgegebenen Grenzwert entsprechend kann.

In einer Ausführung umfasst die Reaktion die, insbesondere optische bzw. visuelle, akustische und/oder haptische, Ausgabe einer Meldung, insbesondere auf einem Bildschirm und/oder durch Aktivieren eines Leuchtmittels. Auf diese Weise kann der Benutzer darauf hingewiesen werden, dass die von ihm vorgenommene bzw. gewünschte Veränderung des Teils der initial vorgegebenen Bahn zu einer Veränderung bzw. Abweichung führt, die die vorgegebenen Reaktionsbedingung erfüllt, insbesondere ein Abstand zwischen initial vorgegebener und entsprechend veränderter Bahn einen vorgegebenen Grenzwert übersteigt. In einer Ausführung wird die Abweichung, insbesondere die Differenz des maximalen Abstandes zum vorgegebenen Grenzwert, ausgegeben.

Zusätzlich oder alternativ kann die Reaktion eine Abfrage einer Genehmigung der Änderung umfassen, wobei der veränderte Teil und/oder die veränderte Bahn verworfen wird, falls die Änderung vom Benutzer abgelehnt bzw. trotz Abfrage nicht genehmigt wird.

Entsprechend wird in einer Ausführung der veränderte Teil und/oder die veränderte Bahn, insbesondere also eine vom Benutzer veränderte Stützstelle wenigstens eines Splines, mittels dem eine Bahn initial vorgegeben ist, zunächst nur temporär vorgegeben, insbesondere abgespeichert, und, insbesondere nur, dann übernommen bzw. an Stelle des Teil der initial vorgegebenen Bahn als Teil der vorgegebenen Bahn bzw. an Stelle der initial vorgegebenen Bahn als neue vorgegebenen Bahn, insbesondere dauerhaft bzw. endgültig und/oder in einem abgespeicherten Programm, übernommen bzw. abgespeichert, wenn die Reaktionsbedingung nicht erfüllt ist oder bei erfüllter Reaktionsbedingung die Änderung vom Benutzer genehmigt bzw. nicht abgelehnt wird.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere die initial vorgegebene Bahn verändern kann.

Weitere Vorteile und Merkmale ergeben sich aus den Unteransprüchen und den Ausführungsbeispielen. Hierzu zeigt, teilweise schematisiert,:
Fig. 1: ein Verändern einer Bahn einer Roboteranordnung nach einer Ausführung der vorliegenden Erfindung; und
Fig. 2: ein Verfahren nach einer Ausführung der vorliegenden Erfindung.

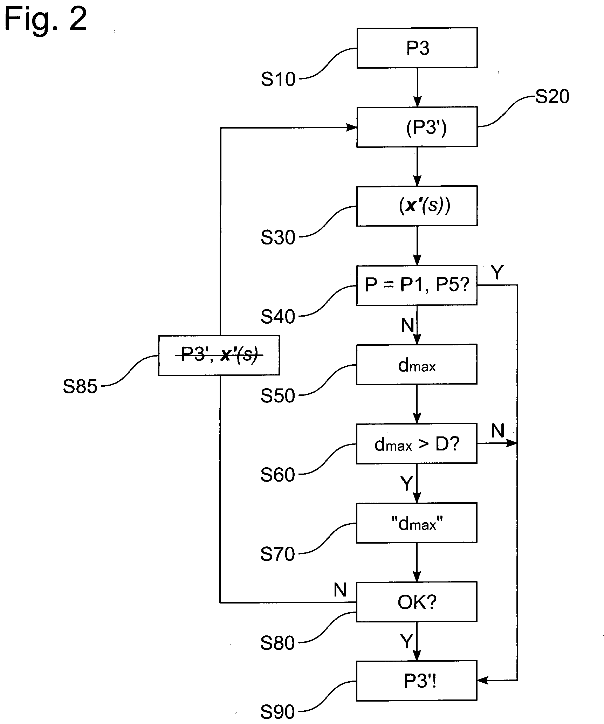

Fig. 2 zeigt ein Verfahren nach einer Ausführung der vorliegenden Erfindung, welches durch ein System in Form einer Steuerung 2 eines Roboters 1 durchgeführt wird.

In einem ersten Schritt S10 wird eine vorgegebene Stützstelle P3 einer mittels Splines durch vorgegebene Stützstellen P1 bis P5 initial vorgegebene Bahn ***x**(s)* eines TCPs eines Roboters, die in Fig. 1 ausgezogen dargestellt ist, ausgewählt, beispielsweise mittels Auswählen eines entsprechenden, diese Stützstelle P3 definierenden Befehls eines Programms, durch das die Bahn initial vorgegeben ist.

In einem zweiten Schritt S20 wird die ausgewählte Stützstelle P3 mittels manuell gesteuertem Anfahren einer neuen Lage und/oder Orientierung des TCPs und entsprechender Bestätigungseingabe ("touch up") durch den Benutzer, zunächst temporär ("(P3)"), verändert bzw. als neue veränderte Stützstelle P3' vorgegeben, wie in Fig. 1 durch einen Verschiebepfeil ΔP3: P3→P3' angedeutet.

Dann gibt die Steuerung in einem Schritt S30, zunächst temporär ("***x**'(s)*"), eine veränderte Bahn ***x**'(s)* auf Basis der veränderten Stützstelle P3' mittels Splines durch die Stützstellen P1, P2, P3', P4 und P5 vor, die in Fig. 1 gestrichelt dargestellt ist.

In einem Schritt S40 prüft die Steuerung, ob eine Auswahlbedingung erfüllt ist.

Diese umfasst im Ausführungsbeispiel eine Benutzerauswahl. Die Steuerung führt die nachfolgenden Schritte S50 bis S80 nur durch, wenn ein Benutzer dies ausgewählt hat, andernfalls (S40: "Y") springt sie unmittelbar zu Schritt S90, in dem die zunächst nur temporär abgespeicherte veränderte Stützstelle P3' und somit auch die veränderte Bahn ***x***'*(s)* an Stelle der initial vorgegebenen Stützstelle P3 bzw. der initial vorgegebenen Bahn ***x**(s)* übernommen, insbesondere abgespeichert wird ("P3!").

Zusätzlich umfasst die Auswahlbedingung eine Eigenschaft der ausgewählten Stützstelle. Die Steuerung führt die nachfolgenden Schritte S50 bis S80 nur durch, wenn die ausgewählten Stützstelle nicht die erste Stützstelle P1 oder letzte Stützstelle P5 der initial vorgegebenen Bahn ***x**(s)* ist, andernfalls (S40: "Y") springt sie entsprechend unmittelbar zu Schritt S90.

Hat der Benutzer eine Überprüfung der Abweichung gewählt und ist die ausgewählte Stützstelle nicht die erste oder letzte Stützstelle (S40: "N"), bestimmt die Steuerung in einem Schritt S50 eine Abweichung in Form eines maximalen Abstandes dₘₐₓ zwischen der initial vorgegebenen Bahn ***x**(s)* und der veränderten Bahn ***x'**(s)*. In einer nicht dargestellten Abwandlung kann die Abweichung auch Abstände zwischen ausgewählten korrespondierenden Teilstrecken, insbesondere Punkten, der Bahnen umfassen.

Der Abstand zwischen einem Punkt der initial vorgegebenen Bahn und einem korrespondierenden Punkt der veränderten Bahn ist dabei im Ausführungsbeispiel der Betrags eines Verbindungsvektors von dem Punkt der initial vorgegebenen Bahn zu einem Schnittpunkt einer Normalebene durch diesen Punkt, die auf einer Bahntangente in diesem Punkt senkrecht steht, mit der veränderten Bahn.

In einem Schritt S60 prüft die Steuerung, ob die Abweichung einen vorgegebenen Grenzwert D übersteigt und somit eine vorgegebene Reaktionsbedingung erfüllt ist (S60: "Y") oder nicht (S60: "N").

Entsprechend ist im Ausführungsbeispiel die Reaktionsbedingung genau dann erfüllt, wenn die veränderte Bahn ***x***'*(s)* wenigstens punktuell außerhalb eines vorgegebenen Toleranzschlauchs um die initial vorgegebene Bahn ***x**(s)* liegt, dessen konstanter Radius dem vorgegebenen Grenzwert D entspricht (vgl. Fig. 1).

Ist die Reaktionsbedingung erfüllt (S60: "Y"), löst die Steuerung eine Reaktion aus, indem sie die nachfolgenden Schritte S70, S80 durchführt. Andernfalls (S60: "N") löst die Steuerung diese Reaktion nicht aus, sondern springt unmittelbar zu Schritt S90.

In Schritt S70 gibt die Steuerung eine Meldung aus, die den Benutzer darauf hinweist, dass die von ihm vorgenommene bzw. gewünschte Veränderung ΔP3 zu einer Veränderung bzw. Abweichung führt, die die vorgegebenen Reaktionsbedingung erfüllt, insbesondere ein Abstand d zwischen initial vorgegebener und entsprechend veränderter Bahn einen vorgegebenen Grenzwert D übersteigt. Im Ausführungsbeispiel wird der maximale Abstand dₘₐₓ oder die Differenz zwischen dem vorgegebenen Grenzwert bzw. Radius des Toleranzschlauchs D und dem maximale Abstand dₘₐₓ ausgegeben.

Zusätzlich erfragt die Steuerung in einem Schritt S80 eine Genehmigung der Änderung.

Lehnt der Benutzer die Änderung ab bzw. genehmigt sie trotz Abfrage nicht (S80: "N"), werden die veränderte Stützstelle P3' und somit die veränderte Bahn ***x***'*(s)* in einem Schritt S85 verworfen (""). Die Steuerung kehrt dann zu Schritt S20 zurück, in der der Benutzer die ausgewählte Stützstelle anderweitig verändert kann.

Andernfalls (S80: "Y") werden in einem Schritt S90 die zunächst nur temporär abgespeicherte, veränderte Stützstelle P3' und damit auch die veränderte Bahn ***x***'*(s)* an Stelle der initial vorgegebenen Stützstelle P3 bzw. der initial vorgegebenen Bahn ***x**(s)* übernommen, insbesondere abgespeichert ("P3'!").

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezuaszeichenliste

- 1: Roboter
- 2: Steuerung (System)
- P1,...P5: Stützstellen
- ***x**(s)*: initial vorgegebene Spline-Bahn
- ***x***'*(s)*: veränderte Spline-Bahn
- dₘₐₓ: Abstand (Abweichung)
- D: Grenzwert

## Patentansprüche

1. Verfahren zum Verändern einer initial vorgegebenen Bahn (***x**(s)*) einer Roboteranordnung mit wenigstens einem Roboter (1), mit den Schritten:
Auswählen (S10) eines Teils (P3) der initial vorgegebenen Bahn;
Verändern (S20) des ausgewählten Teils;
Vorgeben (S30) einer veränderten Bahn (***x'**(s)*) auf Basis des veränderten Teils;
Bestimmen (S50) einer Abweichung (dₘₐₓ) zwischen der initial vorgegebenen und der veränderten Bahn, insbesondere in Abhängigkeit von einer vorgegebenen Auswahlbedingung (S40); und
Auslösen (S70, S80) einer Reaktion, falls die Abweichung eine vorgegebene Reaktionsbedingung (S60) erfüllt, insbesondere in Abhängigkeit von einer vorgegebenen Auswahlbedingung (S40),
wobei die Reaktionsbedingung (S60) erfüllt ist, falls die Abweichung einen vorgegebenen Grenzwert (D) übersteigt, und
der Teil mittels manuellen Auswählens eines Befehls eines Programms, durch das die Bahn vorgegeben ist, und/oder durch manuell gesteuertes Anfahren einer entsprechenden Pose der Roboteranordnung ausgewählt wird.

2. Verfahren nach Anspruch 1, **dadurch gekennzeichnet, dass** die Bahn wenigstens abschnittsweise, insbesondere im Bereich des Teils, mittels wenigstens eines Splines vorgegeben ist.

3. Verfahren nach einem der vorhergehenden Ansprüche, **dadurch gekennzeichnet, dass** der Teil eine Stützstelle der Bahn aufweist, insbesondere eine Stützstelle (P3, P3') der Bahn (***x**(s)*, ***x'**(s)*) ist.

4. Verfahren nach einem der vorhergehenden Ansprüche, **dadurch gekennzeichnet, dass** der ausgewählte Teil (P3) mittels Vorgabe, insbesondere Anfahren, eines neuen Teils (P3') verändert wird.

5. Verfahren nach einem der vorhergehenden Ansprüche, **dadurch gekennzeichnet, dass** die Auswahlbedingung (S40) eine Benutzerauswahl und/oder eine Eigenschaft des ausgewählten Teils umfasst.

6. Verfahren nach einem der vorhergehenden Ansprüche, **dadurch gekennzeichnet, dass** die Abweichung einen maximalen Abstand (dₘₐₓ) zwischen der initial vorgegebenen und der veränderten Bahn und/oder einen Abstand zwischen einem vorgegebenen Bereich der initial vorgegebenen und der veränderten Bahn umfasst, insbesondere ist.

7. Verfahren nach einem der vorhergehenden Ansprüche, **dadurch gekennzeichnet, dass** die Reaktion die Ausgabe (S70) einer Meldung, insbesondere der Abweichung, umfasst.

8. Verfahren nach einem der vorhergehenden Ansprüche, **dadurch gekennzeichnet, dass** die Reaktion eine Abfrage (S80) einer Genehmigung der Änderung umfasst, wobei der veränderte Teil und/oder die veränderte Bahn verworfen (S85) wird, falls die Änderung vom Benutzer abgelehnt wird.

9. Verfahren nach einem der vorhergehenden Ansprüche, **dadurch gekennzeichnet, dass** die Bahn eine Abfolge, insbesondere dreidimensionaler, Lagen und/oder Orientierungen wenigstens einer roboterfesten Referenz definiert.

10. System (2) zum Verändern einer initial vorgegebenen Bahn (***x**(s)*) einer Roboteranordnung mit wenigstens einem Roboter (1), das zur Durchführung eines Verfahrens nach einem der vorhergehenden Ansprüche eingerichtet ist und aufweist:
Mittel (2) zum Auswählen eines Teils (P3) der initial vorgegebenen Bahn;
Mittel (2) zum Verändern des ausgewählten Teils;
Mittel (2) zum Vorgeben einer veränderten Bahn (***x'**(s)*) auf Basis des veränderten Teils (P3');
Mittel (2) zum Bestimmen einer Abweichung (dₘₐₓ) zwischen der initial vorgegebenen und der veränderten Bahn, insbesondere in Abhängigkeit von einer vorgegebenen Auswahlbedingung, und
Mittel (2) zum Auslösen einer Reaktion, falls die Abweichung eine vorgegebene Reaktionsbedingung erfüllt, insbesondere in Abhängigkeit von einer vorgegebenen Auswahlbedingung.

11. Computerprogrammprodukt mit einem Programmcode, der auf einem von einem Computer lesbaren Medium gespeichert ist, zur Durchführung eines Verfahrens nach einem der vorhergehenden Ansprüche.

## Claims

1. A method of modifying an initially predetermined path (***x**(s)*) of a robot assembly comprising at least one robot (1), the method comprising the steps of:
selecting (S10) a portion (P3) of the initially predetermined path;
modifying (S20) the selected portion;
specifying (S30) a modified path (***x'**(s)*) on the basis of the modified portion;
determining (S50) a deviation (dₘₐₓ) between the initially predetermined path and the modified path, in particular as a function of a predetermined selection condition (S40); and
triggering (S70, S80) a reaction if the deviation satisfies a predetermined reaction condition (S60), in particular as a function of a predetermined selection condition (S40), wherein the reaction condition (S60) is satisfied if the deviation exceeds a predetermined threshold value (D), and
the portion is selected by means of a manual selection of an instruction of a program by which the path is predetermined, and / or by a manually controlled approach of a corresponding pose of the robot assembly.

2. The method according to claim 1, **characterised in that** the path is predetermined, at least in sections, in particular in the region of said portion, by means of at least one spline.

3. The method according to any one of the preceding claims, **characterised in that** said portion comprises a support point of the path, in particular that it is a support point (P3, P3') of the path (***x**(s)*, ***x'**(s)*)*.*

4. The method according to any one of the preceding claims, **characterised in that** the selected portion (P3) is modified by specifying a new portion (P3'), in particular by approaching a new portion (P3').

5. The method according to any one of the preceding claims, **characterised in that** the selection condition (S40) comprises a user selection and / or a property of the selected portion.

6. The method according to any one of the preceding claims, **characterised in that** the deviation comprises a maximum distance (dₘₐₓ) between the initially predetermined path and the modified path and / or a distance between a predetermined region of the initially predetermined path and the modified path, in particular that the deviation is a maximum distance (dₘₐₓ) between the initially predetermined path and the modified path and / or a distance between a predetermined region of the initially predetermined path and the modified path.

7. The method according to any one of the preceding claims, **characterised in that** the reaction comprises the outputting (S70) of a message, in particular the outputting of the deviation.

8. The method according to any one of the preceding claims, **characterised in that** the reaction comprises a request (S80) for an authorisation of the modification, wherein the modified portion and / or the modified path is discarded (S85) if the modification is rejected by the user.

9. The method according to any one of the preceding claims, **characterised in that** the path defines a sequence of positions and / or orientations of at least one reference fixed with respect to the robot, in particular of three-dimensional positions and / or orientations of at least one reference fixed with respect to the robot.

10. A system (2) for modifying an initially predetermined path (***x**(s)*) of a robot assembly comprising at least one robot (1) which system is arranged to carry out a method according to any one of the preceding claims and which comprises:
means (2) for selecting a portion (P3) of the initially predetermined path;
means (2) for modifying the selected portion;
means (2) for specifying a modified path (***x'**(s)*) on the basis of the modified portion (P3');
means (2) for determining a deviation (dₘₐₓ) between the initially predetermined path and the modified path, in particular as a function of a predetermined selection condition, and
means (2) for triggering a reaction if the deviation satisfies a predetermined reaction condition, in particular as a function of a predetermined selection condition.

11. A computer program product comprising a program code which is stored on a medium which can be read by a computer, for carrying out a method according to any one of the preceding claims.

## Revendications

1. Procédé de modification d'une trajectoire prédéfinie (x(s)) d'un ensemble robot avec au moins un robot (1), avec les étapes :
sélection (S10) d'une partie (P3) de la trajectoire prédéfinie ;
modification (S20) de la partie sélectionnée ;
prédéfinition (S30) d'une trajectoire modifiée (x'(s)) sur la base de la partie modifiée ;
détermination (S50) d'un écart (dₘₐₓ) entre la trajectoire prédéfinie et la trajectoire modifiée, en particulier en fonction d'une condition de sélection prédéfinie (S40) ; et
déclenchement (S70, S80) d'une réaction, si l'écart remplit une condition de réaction prédéfinie (S60), en particulier en fonction d'une condition de sélection prédéfinie (S40),
dans lequel la condition de réaction (S60) est remplie, si l'écart dépasse une valeur limite prédéfinie (D), et
la partie est sélectionnée au moyen d'une sélection manuelle d'un ordre d'un programme, par lequel la trajectoire est prédéfinie, et/ou par une approche commandée manuellement d'une pose correspondante de l'ensemble robot.

2. Procédé selon la revendication 1, **caractérisé en ce que** la trajectoire est prédéfinie au moins par section, en particulier dans la zone de la partie, au moyen d'au moins un spline.

3. Procédé selon l'une quelconque des revendications précédentes, **caractérisé en ce que** la partie présente un point d'appui de la trajectoire, en particulier est un point d'appui (P3, P3') de la trajectoire (x(s), x'(s)).

4. Procédé selon l'une quelconque des revendications précédentes, **caractérisé en ce que** la partie sélectionnée (P3) est modifiée par prédéfinition, en particulier approche, d'une nouvelle partie (P3').

5. Procédé selon l'une quelconque des revendications précédentes, **caractérisé en ce que** la condition de sélection (S40) comprend une sélection d'utilisateur et/ou une propriété de la partie sélectionnée.

6. Procédé selon l'une quelconque des revendications précédentes, **caractérisé en ce que** l'écart comprend, en particulier est, une distance maximum (dₘₐₓ) entre la trajectoire prédéfinie et la trajectoire modifiée et/ou une distance entre une zone prédéfinie de la trajectoire prédéfinie et de la trajectoire modifiée.

7. Procédé selon l'une quelconque des revendications précédentes, **caractérisé en ce que** la réaction comprend l'émission (S70) d'un message, en particulier de l'écart.

8. Procédé selon l'une quelconque des revendications précédentes, **caractérisé en ce que** la réaction comprend une requête (S80) d'une autorisation de la modification, dans lequel la partie modifiée et/ou la trajectoire modifiée est rejetée (S85), si la modification est refusée par l'utilisateur.

9. Procédé selon l'une quelconque des revendications précédentes, **caractérisé en ce que** la trajectoire définit une succession de couches, en particulier tridimensionnelles, et/ou d'orientations d'au moins une référence propre au robot.

10. Système (2) de modification d'une trajectoire prédéfinie (x(s)) d'un ensemble robot avec au moins un robot (1), qui est aménagé pour la réalisation d'un procédé selon l'une quelconque des revendications précédentes, et présente :
des moyens (2) pour la sélection d'une partie (P3) de la trajectoire prédéfinie ;
des moyens (2) pour la modification de la partie sélectionnée ;
des moyens (2) pour la prédéfinition d'une trajectoire modifiée (x'(s)) sur la base de la partie modifiée (P3') ;
des moyens (2) pour la détermination d'un écart (dₘₐₓ) entre la trajectoire prédéfinie et la trajectoire modifiée, en particulier en fonction d'une condition de sélection prédéfinie, et
des moyens (2) pour le déclenchement d'une réaction, si l'écart remplit une condition de réaction prédéfinie, en particulier en fonction d'une condition de sélection prédéfinie,

11. Produit de programme informatique avec un code de programme, qui est enregistré sur un support lisible par ordinateur, pour la réalisation d'un procédé selon l'une quelconque des revendications précédentes.
